(19) Europäisches Patentamt
European Patent Office
Office européen des brevets

(11) **EP 3 152 531 B1**

(12) **EUROPÄISCHE PATENTSCHRIFT**

(45) Veröffentlichungstag und Bekanntmachung des Hinweises auf die Patenterteilung:
**06.10.2021 Patentblatt 2021/40**

(21) Anmeldenummer: **14728220.6**

(22) Anmeldetag: **06.06.2014**

(51) Int Cl.:
*G01S 7/40* (2006.01)   *G01S 13/88* (2006.01)
*G01F 23/284* (2006.01)

(86) Internationale Anmeldenummer:
**PCT/EP2014/061847**

(87) Internationale Veröffentlichungsnummer:
**WO 2015/185156 (10.12.2015 Gazette 2015/49)**

(54) **FÜLLSTANDMESSGERÄT MIT LAUFZEITKORREKTUR**

LEVEL GAUGE FEATURING PROPAGATION TIME CORRECTION

APPAREIL DE MESURE DE NIVEAU À CORRECTION DU TEMPS DE PROPAGATION

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(43) Veröffentlichungstag der Anmeldung:
**12.04.2017 Patentblatt 2017/15**

(73) Patentinhaber: **VEGA Grieshaber KG**
**77709 Wolfach (DE)**

(72) Erfinder:
• **HOFERER, Christian**
**77654 Offenburg (DE)**
• **BENZ, Joachim**
**77756 Hausach (DE)**
• **HAAS, Jürgen**
**77709 Oberwolfach (DE)**
• **KAUFMANN, Manuel**
**77723 Gengenbach (DE)**
• **MOTZER, Jürgen**
**77723 Gengenbach (DE)**

(74) Vertreter: **Maiwald Patent- und Rechtsanwaltsgesellschaft mbH**
**Elisenhof**
**Elisenstraße 3**
**80335 München (DE)**

(56) Entgegenhaltungen:
DE-A1- 19 511 234    US-A- 5 263 371
US-A1- 2005 024 259    US-A1- 2005 281 134

EP 3 152 531 B1

## Beschreibung

Gebiet der Erfindung

Die Erfindung betrifft die Füllstandmessung in Behältern, auf Halden oder Bunkern. Insbesondere betrifft die Erfindung ein Füllstandmessgerät mit Laufzeitkorrektur, ein Verfahren zum Korrigieren einer von einem Füllstandmessgerät bestimmten Laufzeit eines an der Oberfläche eines Füllguts reflektierten Messsignals, ein Programmelement und ein computerlesbares Medium.

Technischer Hintergrund

Eine elektromagnetische Welle, die als Messsignal von Füllstandsensoren dient, breitet sich im Vakuum mit Lichtgeschwindigkeit aus. Es sind technische Verfahren bekannt, die es erlauben, die Laufzeit zwischen dem Aussenden einer derartigen Welle und dem Empfang der Reflexion dieser Welle an der Oberfläche des Füllgutes zu messen und daraus einen Füllstand zu ermitteln.

Für die Ermittlung des Füllstands über die Messung der Laufzeit des Messsignals von der Antenne zur Füllgutoberfläche und wieder zurück zur Antenne ist es notwendig, genaue Kenntnis von der Ausbreitungsgeschwindigkeit des Messsignals auf seinem Weg von der Antenne zur Füllgutoberfläche und zurück zu haben.

Bewegt sich das Messsignal nicht im Vakuum, sondern in einem Medium, liegt die Ausbreitungsgeschwindigkeit des Messsignals unterhalb der Ausbreitungsgeschwindigkeit im Vakuum. Dieser Effekt kann bei der Berechnung des Füllstands berücksichtigt werden, wenn die Zusammensetzung der Atmosphäre über dem Füllgut bekannt ist.

US 2005/0024259 A1 beschreibt ein Füllstandradargerät, das nach dem Prinzip der geführten Wellen misst. Der Radarwellenleiter des Messgeräts weist eine Reflexionsstelle auf, die in bekanntem Abstand von einem, am oberen Ende des Wellenleiters befindlichen Radarwellensenders angeordnet ist.

Zusammenfassung der Erfindung

Es ist eine Aufgabe der Erfindung, die Genauigkeit der Füllstandbestimmung zu verbessern.

Diese Aufgabe wird durch die Merkmale der unabhängigen und nebengeordneten Ansprüche gelöst. Weiterbildungen der Erfindung ergeben sich aus den abhängigen Ansprüchen und der folgenden Beschreibung.

Gemäß einem ersten Aspekt der Erfindung wird ein Füllstandmessgerät mit Laufzeitkorrektur angegeben, welches eine Sende- und Empfangseinheit und eine Auswerteeinheit aufweist. Die Sende- und Empfangseinheit dient dem Abstrahlen eines Messsignals in Richtung einer Oberfläche eines Füllgutes und dem Empfangen des an der Oberfläche des Füllgutes sowie an einer Referenzreflexionsstelle reflektierten Messsignals.

Die Auswerteeinheit ist zum Bestimmen eines Prozessparameters am Ort der Referenzreflexionsstelle unter Verwendung des an der Referenzreflexionsstelle reflektierten Messsignals (aus welchem sich die tatsächliche Laufzeit des an der Referenzreflexionsstelle reflektierten Messsignals bestimmen lässt), sowie bekannter physikalischer Eigenschaften des Füllgutes und/oder Mediums (Atmosphäre) oberhalb der Füllgutoberfläche (also beispielsweise der Behälteratmosphäre), in welchem sich die Referenzreflexionsstelle befindet, ausgeführt. Der Ort der Referenzreflexionsstelle ist hierbei bekannt. Bei den "bekannten" physikalischen Eigenschaften handelt es sich beispielsweise um den Zusammenhang zwischen der Temperatur und/oder dem Druck am Ort der Referenzreflexionsstelle und der relativen Permittivität des Füllgutes/Mediums, in dem sich die Referenzreflexionsstelle befindet, und dessen relative Permeabilität.

Die Auswerteeinheit ist darüber hinaus zum Bestimmen eines Korrekturfaktors für die vom Füllstandmessgerät durch Auswertung des empfangenen Messsignals bestimmten Laufzeit des an der Oberfläche des Füllgutes reflektierten Messsignals ausgeführt. Die Bestimmung des Korrekturfaktors erfolgt hierbei unter Verwendung des vorher bestimmten Prozessparameters, der bekannten physikalischen Eigenschaften, sowie einer Abweichung des Prozessparameters.

Die vom Füllstandmessgerät durch Auswertung der Echokurve bestimmte Laufzeit des an der Oberfläche des Füllguts reflektierten Messsignals kann nur dann mit hoher Genauigkeit bestimmt werden, wenn die Ausbreitungsgeschwindigkeit des Messsignals auf seinem Weg zur Füllgutoberfläche und zurück bekannt ist. Um genaue Kenntnis von dieser Ausbreitungsgeschwindigkeit zu erlangen, wird das an der Referenzreflexionsstelle reflektierte Messsignal analysiert und dessen Laufzeit von der Sende- und Empfangseinheit zur Referenzreflexionsstelle und zurück bestimmt.

Durch die zeitliche Änderung eines oder mehrerer Prozessparameter des Füllgutes und/oder der Atmosphäre (des Mediums) oberhalb der Füllgutoberfläche kann sich eine Änderung der Ausbreitungsgeschwindigkeit des Messsignals in der Atmosphäre oberhalb der Füllgutoberfläche ergeben, welche durch den Korrekturfaktor berücksichtigt werden kann.

Gemäß einer Ausführungsform der Erfindung ist die Auswerteeinheit weiterhin zum Korrigieren der vom Füllstandmessgerät bestimmten Laufzeit des an der Oberfläche des Füllgutes reflektierten Messsignals unter Verwendung des Korrekturfaktors ausgeführt.

Bei dem Prozessparameter handelt es sich beispielsweise um die Temperatur am Ort der Referenzreflexionsstelle oder den Druck am Ort der Referenzreflexionsstelle.

Gemäß einer weiteren Ausführungsform der Erfindung entspricht die Abweichung des Prozessparameters einer Differenz des (geschätzten) Wertes des Prozessparameters am Ort der Referenzreflexionsstelle und des (geschätzten oder durch Eichmessungen bestimmten) durchschnittlichen Wertes des Prozessparameters oberhalb der Oberfläche des Füllgutes. Es handelt sich hierbei also beispielsweise um eine Temperaturdifferenz oder eine Druckdifferenz.

Gemäß einer weiteren Ausführungsform der Erfindung ist das Füllstandmessgerät zum Bestimmen der Abweichung des Prozessparameters während einer Eichmessung ausgeführt. Bei dieser Eichmessung handelt es sich beispielsweise um eine Messung bei gegebenen, wohl definierten Umgebungsbedingungen, bei welcher die Temperatur- oder Druckdifferenz zwischen dem Ort der Referenzreflexionsstelle und dem durchschnittlichen Wert der Atmosphäre oberhalb der Füllgutoberfläche bestimmt wird. Diese Eichmessung kann für verschiedene Füllstände und verschiedene Umgebungsbedingungen (also beispielsweise für verschiedene Füllguttemperaturen) durchgeführt werden und in Form einer Tabelle im Füllstandmessgerät gespeichert werden.

Auch kann vorgesehen sein, dass das Füllstandmessgerät eine Eingabeeinrichtung aufweist, mithilfe welcher die verschiedenen Abweichungen des Prozessparameters bei den verschiedenen Umgebungsbedingungen eingegeben werden können.

Gemäß einer weiteren Ausführungsform der Erfindung ist die Auswerteeinheit zum Berechnen des Korrekturfaktors in Abhängigkeit des Prozessparameters am Ort der Referenzreflexionsstelle, der Abweichung und der Distanz zwischen der Referenzreflexionsstelle und der Oberfläche des Füllgutes ausgeführt.

In anderen Worten ist der Korrekturfaktor vom tatsächlichen Füllstand abhängig. Beispielsweise ist es möglich, dass die Temperaturdifferenz zwischen einer Stelle direkt oberhalb oder unterhalb der Füllgutoberfläche und der Referenzreflexionsstelle (auch) vom Füllstand abhängt, und somit keine Konstante ist.

Gemäß einem weiteren Aspekt der Erfindung ist ein Verfahren zum Korrigieren einer von einem Füllstandmessgerät bestimmten Laufzeit eines an der Oberfläche eines Füllgutes reflektierten Messsignals angegeben, bei dem zunächst ein Messsignal in Richtung einer Oberfläche eines Füllgutes abgestrahlt wird. Das an der Oberfläche des Füllgutes sowie an einer Referenzreflexionsstelle reflektierte Messsignal wird daraufhin wieder empfangen und es wird ein Prozessparameter am Ort der Referenzreflexionsstelle unter Verwendung des an der Referenzreflexionsstelle reflektierten Messsignals sowie bekannter physikalischer Eigenschaften des Füllgutes und/oder des Mediums oberhalb der Füllgutoberfläche bestimmt. Daraufhin erfolgt die Bestimmung eines Korrekturfaktors für eine vom Füllstandmessgerät bestimmte Laufzeit des an der Oberfläche des Füllgutes reflektierten Messsignals unter Verwendung des Prozessparameters, der bekannten physikalischen Eigenschaften und einer Abweichung des Prozessparameters.

Gemäß einer weiteren Ausführungsform der Erfindung erfolgt ein Korrigieren der vom Füllstandmessgerät bestimmten Laufzeit des von der Oberfläche des Füllgutes reflektierten Messsignals unter Verwendung des Korrekturfaktors.

Gemäß einer weiteren Ausführungsform der Erfindung erfolgt das Berechnen des Korrekturfaktors in Abhängigkeit des Prozessparameters am Ort der Referenzreflexionsstelle, der Abweichung und der Distanz zwischen der Referenzreflexionsstelle und der Oberfläche des Füllgutes.

An dieser Stelle sei daraufhingewiesen, dass die oben und im Folgenden im Hinblick auf das Füllstandmessgerät beschriebenen Merkmale auch als Verfahrensschritte implementiert werden können. Ebenso können die oben und im Folgenden beschriebenen Verfahrensschritte von bestimmten Ausführungsformen des Füllstandmessgeräts durchgeführt werden.

Gemäß einem weiteren Aspekt der Erfindung ist ein Programmelement angegeben, das, wenn es auf einem Prozessor eines Füllstandmessgeräts ausgeführt wird, das Füllstandmessgerät anleitet, die oben und im Folgenden beschriebenen Schritte durchzuführen.

Gemäß einer weiteren Ausführungsform der Erfindung ist ein computerlesbares Medium angegeben, auf dem ein oben beschriebenes Programmelement gespeichert ist.

Das Programmelement kann Teil einer Software sein, die auf einem Prozessor gespeichert ist. Weiterhin umfasst diese Ausführungsform der Erfindung ein Programmelement, welches schon von Anfang an die Erfindung verwendet, sowie auch ein Programmelement, welches durch eine Aktualisierung (Update) ein bestehendes Programm zur Verwendung der Erfindung veranlasst.

Im Folgenden werden mit Verweis auf die Figuren Ausführungsbeispiele der Erfindung beschrieben.

Kurze Beschreibung der Figuren

Fig. 1 zeigt ein Füllstandmessgerät zum Bestimmen eines Füllstands in einem Behälter.

Fig. 2 zeigt die Abhängigkeit der relativen Permittivität von gesättigtem Wasserdampf von der Temperatur.

Fig. 3 zeigt die Abhängigkeit eines Korrekturfaktors von der Temperatur.

Fig. 4 zeigt ein Flussdiagramm eines Verfahrens gemäß einem Ausführungsbeispiel der Erfindung.

Detaillierte Beschreibung von Ausführungsbeispielen

Die Darstellungen in den Figuren sind schematisch und nicht maßstäblich.

Werden in der folgenden Figurenbeschreibung in verschiedenen Figuren die gleichen Bezugszeichen verwendet, so bezeichnen diese gleiche oder ähnliche Elemente. Gleiche oder ähnliche Elemente können aber auch durch unterschiedliche Bezugszeichen bezeichnet sein.

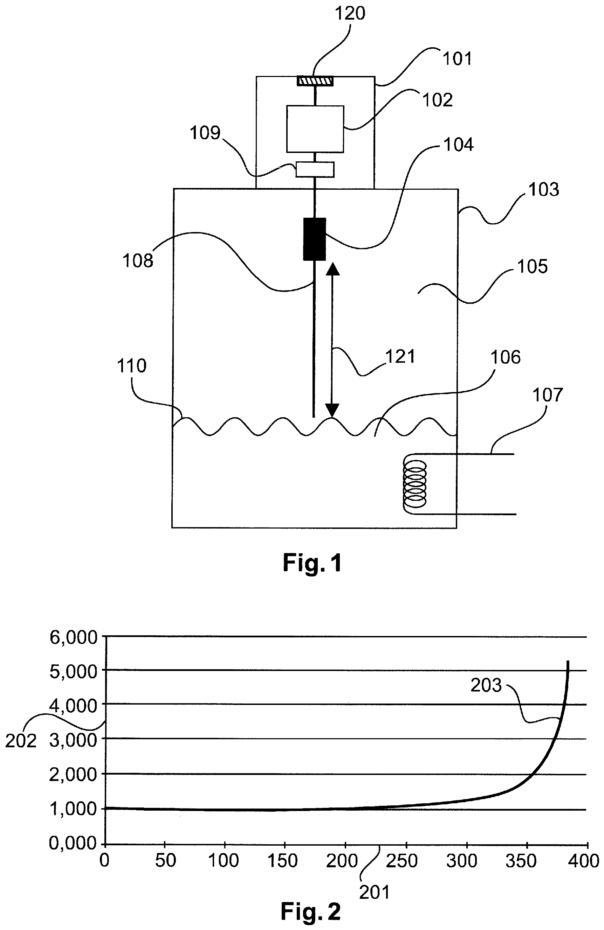

Fig. 1 zeigt ein Füllstandmessgerät 101 zum Bestimmen eines Füllstands in einem Behälter, welches auf dem Prinzip der geführten Mikrowellen basiert. Es kann sich aber auch um ein berührungslos messendes Füllstandmessgerät handeln, beispielsweise ein Füllstandradar.

Das Füllstandmessgerät weist eine Referenzreflexionsstelle 104 und eine Eingabemöglichkeit 120 einer Abweichung eines Prozessparameters (z.B. einer Temperatur oder eines Druckes) vom Wert der Atmosphäre, die die Referenzstelle umgibt, und der Atmosphäre oberhalb des zu messenden Mediums.

Eine elektromagnetische Welle, die als Messsignal von Füllstandsensoren fungiert, breitet sich im Vakuum mit Lichtgeschwindigkeit aus. Technische Verfahren erlauben es, die Laufzeit zwischen dem Aussenden solch einer Welle und Empfang der Reflexion der selbigen zu messen und daraus einen Füllstand zu ermitteln. Die Messgenauigkeit kann zudem verbessert werden, wenn sich die Welle nicht im Vakuum sondern in einer anderen Atmosphäre bewegt. Hier liegt die Ausbreitungsgeschwindigkeit der Welle unterhalb derer im Vakuum. Im Vakuum beträgt die Geschwindigkeiten der elektromagnetischen Welle:

$$c_0 = \frac{1}{\sqrt{\varepsilon_0 \mu_0}}$$

$\varepsilon_0$: *Permittivität des Vakuums*
$\mu_0$: *Permeabilität des Vakuums*

In einer anderen Atmosphäre ist sie abhängig von der relativen Permittivität $\varepsilon_r$ und relativen Permeabilität $\mu_r$ der Atmosphäre selbst und beträgt:

$$c_{medium} = \frac{c_0}{\sqrt{\varepsilon_r \mu_r}}$$

Signifikante Änderungen der Laufzeit treten bei Füllstandsensoren insbesondere dann auf, wenn das zu messende Medium verdampft und somit zwischen Sensor und Oberfläche des Mediums sich eine Schicht bildet, welche die Ausbreitungsgeschwindigkeit des Messsignals dämpft. Die physikalischen Eigenschaften des Füllgutes bzw. der Atmosphäre in einem Behälter wirken sich folglich auf die Laufzeit des Messsignals aus.

Es ist möglich, eine Referenzstelle 104 mit bekannter Position anzubringen, an der zumindest ein Teil des Messsignals reflektiert wird, um anhand dieser Reflexion aus dem Versatz zwischen gemessener und bekannter Position der Referenzstelle einen Korrekturfaktor zu bestimmen, welcher die Änderung der Geschwindigkeit des Messsignals kompensiert. Eine weitere Ausführungsform ist es, bei bekannter Geometrie der Referenzstelle aus den reflektierten Signalanteilen des Messsignals den Kompensationsfaktor zu bestimmen.

In verfahrenstechnischen Anlagen wird das zu messende Medium häufig erhitzt, verdampft und bildet dadurch eine Gasatmosphäre oberhalb der zu messenden Füllstandoberfläche aus, welche die Laufzeit des Messsignals beeinflusst. Diese Atmosphäre ist im Regelfall nicht homogen und führt dazu, dass die Geschwindigkeit des Messsignals abhängig von der Zusammensetzung der Atmosphäre variiert. Eine fixe Referenzstelle ermittelt jedoch ausschließlich den Laufzeitversatz des Messsignals an bzw. bis zur Referenzstelle selbst. Ändert sich jetzt die Zusammensetzung der Atmosphäre, welche das Messsignal zwischen Referenzstelle und zu messender Oberfläche durchläuft, so kann der dann entstehende Fehler nicht durch eine einfache Referenzstelle kompensiert werden.

Sind die physikalischen Eigenschaften des zu messenden Mediums bekannt, so kann eine Aussage getroffen werden, wie sich die Atmosphäre oberhalb der Oberfläche verhält, wenn das Medium ausgast. Die Zusammensetzung der gegebenenfalls gasphasigen Atmosphäre hängt stark von mindestens einem Prozessparameter wie z.B. Druck oder Temperatur ab. Ist der Unterschied des Prozessparameters zwischen Referenzstelle und Oberfläche des Mediums bekannt, so kann aus den bekannten physikalischen Eigenschaften des ausgasenden Mediums, dem bekannten Prozessparameter und dem Laufzeitversatz des Messsignals an der Referenzstelle auf die Zusammensetzung der Atmosphäre zwischen Referenzstelle und Oberfläche des zu messenden Mediums geschlossen werden. Dieser abstrakte Ansatz wird weiter unten anhand eines Ausführungsbeispiels näher erläutert.

Das in Fig. 1 gezeigte Ausführungsbeispiel ist ein Füllstandmessgerät, welches mit geführten Mikrowellen nach dem TDR-Prinzip den Füllstand ermittelt. Das erfindungsgemäße Verfahren kann jedoch auch für andere Füllstandsensoren, die nach dem Laufzeitprinzip arbeiten, angewandt werden.

Das Füllstandmessgerät 101 weist eine Auswerteeinheit 102 auf. Entlang seiner Messsonde 108 breitet sich eine elektromagnetische Welle, die von der Sende- und Empfangseinheit 109 erzeugt wurde, aus. Ein Teil des Messsignals wird an der Referenzstelle 104 reflektiert, der restliche Signalanteil wird von der Oberfläche 110 des zu messenden Mediums 106 reflektiert und von der Sende- und Empfangseinheit empfangen.

Die Ausbreitungsgeschwindigkeit des Messsignals richtet sich nach der Zusammensetzung der Atmosphäre 105 oberhalb des zu messenden Mediums 106. Optional kann das Medium im Behälter 103, in welchem der Füllstand ermittelt werden soll, durch eine Heizung 107 erwärmt werden. Weicht die Atmosphäre 105 vom Vakuum ab, so macht sich dies in der Laufzeit und damit in der ermittelten Position von Füllstand und Referenzstelle 104 bemerkbar. Wurde die Position der Referenzstelle zuvor kalibriert, kann auch die Füllstandposition korrigiert werden. Bei einer technischen Anlage zeigt sich in der Praxis, dass die Temperatur im Behälter nicht überall gleich ist, was einem Fachmann auch anhand der Skizze vermittelt wird. So befindet sich die Heizspirale 107, die das Füllmedium 106 erhitzt, unten im Behälter 103. Die Temperatur des Behälters 103 selbst und auch der Atmosphäre 105 im Behälter nimmt von der Heizspirale aus gesehen in Richtung Referenzstelle 104 und Sensor 101 ab.

Wird nun mit der Reflexion der Referenzstelle und der bekannten Position der Referenzstelle ein Korrekturfaktor ermittelt, so entsteht aufgrund der inhomogenen Atmosphäre ein systematischer Fehler. Ziel des Verfahrens ist es, diesen Fehler zu kompensieren. Ist die Temperaturdifferenz zwischen Referenzstelle und Oberfläche bekannt, so kann aus den Stoffeigenschaften des Füllmediums 106 auf die Zusammensetzung der Atmosphäre 105 geschlossen und dadurch eine Korrektur für die Laufzeit des Messsignals ermittelt werden. Der Zusammenhang zwischen Zusammensetzung der Atmosphäre und einer Prozessgröße (z.B. der Temperatur) lässt sich aus der Literatur ermitteln oder einmalig vermessen.

Das Messgerät 101 weist eine Eingabeeinrichtung 120 auf, um die Differenz (Abweichung) eines Prozessparameters (z.B. der Temperaturdifferenz) zwischen der Referenzreflexionsstelle und der Oberfläche des Mediums bzw. dem durchschnittlichen Wert des Prozessparameters oberhalb der Füllgutoberfläche einzugeben und zu speichern.

Somit kann eine Korrektur der Laufzeit eines Messsignals bei inhomogener Atmosphäre in einem Tank erfolgen. Die Atmosphäre selbst, die sich zwischen der Füllstandoberfläche und dem Messgerät befindet, ist im Regelfall gasförmig. Sie kann jedoch auch andere Aggregatzustände einnehmen, wenn z.B. Öl auf Wasser schwimmt.

Fig. 2 zeigt die Abhängigkeit 203 der relativen Permittivität von gesättigtem Wasserdampf, der in der Prozessindustrie häufig (z.B. in Dampferzeugern von Kraftwerken) auftritt, von der Temperatur. Die y-Achse 202 entspricht der relativen Permittivität, die x-Achse 201 entspricht der Temperatur in °C. Je nach Temperatur ändert sich die relative Permittivität und damit auch die Ausbreitungsgeschwindigkeit im Medium. Die physikalischen Eigenschaften sind bei Wasser und Wasserdampf sogenannten Wasserdampftafeln zu entnehmen und sind in der Literatur ausreichend beschrieben.

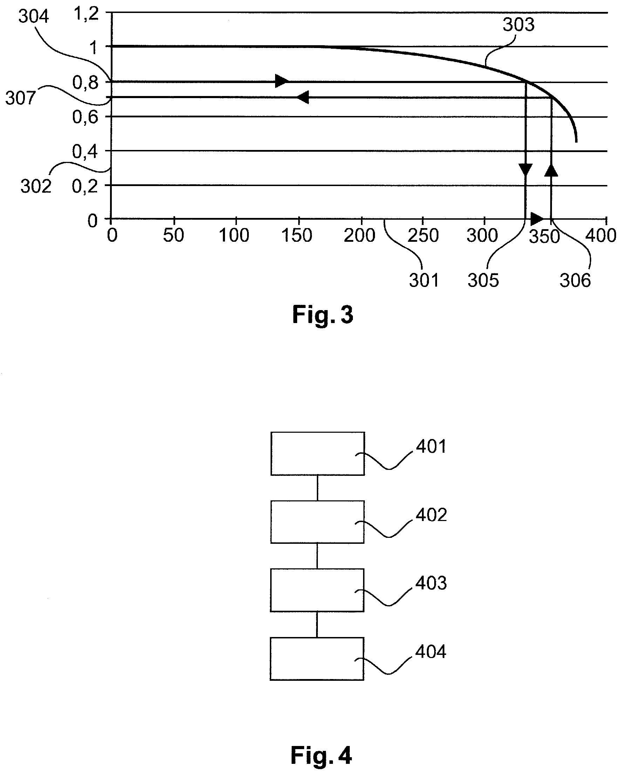

Fig. 3 leitet sich aus den Werten von Fig. 2 ab und zeigt die Abhängigkeit 303 eines Korrekturfaktors, mit dem die Laufzeit des Messsignals bei einer gesättigten Wasserdampfatmosphäre korrigiert werden muss, um bei gegebener Temperatur den Fehler bei der Füllstandmessung zu kompensieren.

Die y-Achse 302 entspricht dem Korrekturfaktor, die x-Achse 301 entspricht der Temperatur in °C. Die in Fig. 3 dargestellte Abhängigkeit ist nur exemplarisch zu sehen. Es kann auch vorgesehen sein, eine Kurve in der Auswerteeinheit zu hinterlegen, die nicht dem physikalischen Ideal entspricht, sondern die Abhängigkeit einer inhomogenen Atmosphäre von der Temperatur oder einem anderen Prozessparameter (beispielsweise ein Druck) beschreibt. Solche Kurven bzw. Zusammenhänge könnten durch Vermessen erlangt werden. Insbesondere können auch weitere Abhängigkeiten im Messgerät gespeichert sein, welche andere Medien als Wasserdampf, beispielsweise Ammoniak oder Wasserstoff, betreffen. Allen denkbar hinterlegten Kurven kann gemein sein, dass sie die physikalischen Eigenschaften des Füllgutes bzw. der Atmosphäre 105 im Behälter 103 in eine Relation zu mindestens einem Prozessparameter bringen. Jede Kurve selbst kann als mathematische Funktion, Tabelle oder Diagramm ausgeführt sein.

Figur 4 zeigt ein Flussdiagramm eines Verfahrens gemäß einem Ausführungsbeispiel der Erfindung. In Schritt 401 wird mit Hilfe des Signalanteils, welcher an der Referenzstelle reflektiert wurde und der bekannten Position der Referenzstelle ein Korrekturfaktor $k_1$ ermittelt.

In Schritt 402 wird eine Schätzung der Temperatur (bzw. eines Prozessparameters) unter Verwendung des berechneten Korrekturfaktors $k_1$ (siehe 304 in Fig. 3) und des Zusammenhangs 303 zwischen der Temperatur und dem Korrekturfaktor gemäß der Abhängigkeit in Fig. 3 durchgeführt. Als Beispiel sei an der Referenzstelle ein Korrekturfaktor von 0,8 einer Wasserdampfatmosphäre ermittelt worden. Aus den Stoffeigenschaften einer gesättigten Wasserdampfatmosphäre gemäß Fig. 3 lässt sich eine entsprechende Temperatur $t_1$ 305 von etwa 332° C ermitteln.

Schritt 403 führt zunächst eine Korrektur der Temperatur (oder eines anderen Prozessparameters) durch. Hierzu wird entweder auf einen parametrierten Temperaturunterschied (dieser ist aus der Geometrie des Behälters dem Betreiber der Anlage bekannt oder wird einmalig gemessen) zurückgegriffen oder der Temperaturunterschied wird kontinuierlich gemessen. Im Regelfall ist bei einer Anlage im laufenden Betrieb der Temperaturunterschied bzw. die Abweichung der Temperatur zwischen Medium und Referenzstelle konstant. Z.B. beträgt der Temperaturunterschied wie im Beispiel der Fig. 3 20° C. Die korrigierte Temperatur $t_2$ ist dann $t_2 = t_1 + 20° C = 352° C$ (siehe Bezugszeichen 306 in Fig. 3).

In Schritt 404 wird schließlich aus den Zahlenwerten aus Fig. 3 und der korrigierten Temperatur $t_2$ ein neuer Korrekturfaktor $k_2$ (siehe Bezugszeichen 307 in Fig. 3) ermittelt. Bei $t_2 = 352° C$ wäre dieser beispielhaft 0,72. Dieser Korrekturfaktor ist für die Korrektur der Laufzeit des Messsignals ausschlaggebend.

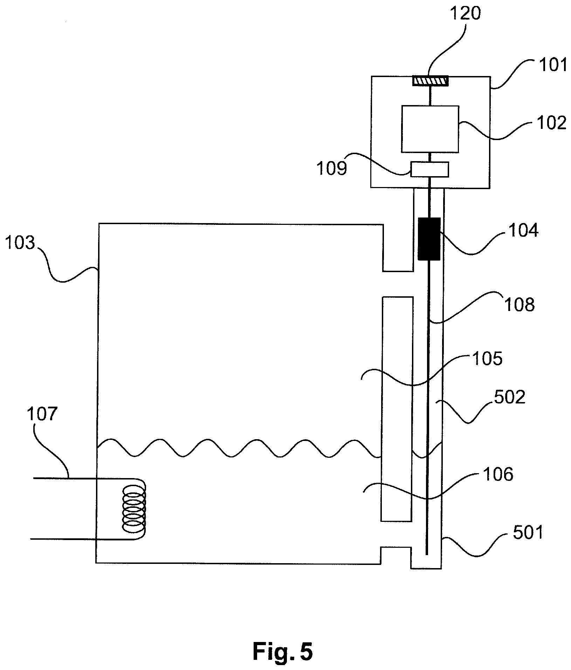

Fig. 5 zeigt eine Ergänzung zu Fig. 1. Hier ist der Sensor des Messgeräts 101 in einem sogenannten Bypass 501 montiert. Fig. 5 verdeutlicht noch einmal, dass nicht davon ausgegangen werden kann, dass die Atmosphäre 105 an der Referenzstelle 104 und im Tank 103 identisch sind. Das Bezugzeichen 502 bezeichnet die Atmosphäre im Bypass, welche von er Atmosphäre 105 im Behälter abweichen kann.

Ergänzend sei daraufhingewiesen, dass "umfassend" und "aufweisend" keine anderen Elemente oder Schritte ausschließt und "eine" oder "ein" keine Vielzahl ausschließt. Ferner sei daraufhingewiesen, dass Merkmale oder Schritte, die mit Verweis auf eines der obigen Ausführungsbeispiele beschrieben worden sind, auch in Kombination mit anderen Merkmalen oder Schritten anderer oben beschriebener Ausführungsbeispiele verwendet werden können. Bezugzeichen in den Ansprüchen sind nicht als Einschränkungen anzusehen.

**Patentansprüche**

1. Füllstandmessgerät (101) mit Laufzeitkorrektur, aufweisend:

   eine Sende- und Empfangseinheit (109) zum Abstrahlen eines Messsignals in Richtung einer Oberfläche (110) eines Füllgutes (106) und zum Empfangen des an der Oberfläche des Füllgutes sowie an einer Referenzreflexionsstelle (104) reflektierten Messsignals;
   eine Auswerteeinheit (102) zum Bestimmen eines Prozessparameters am Ort der Referenzreflexionsstelle unter Verwendung des an der Referenzreflexionsstelle reflektierten Messsignals sowie bekannter physikalischer Eigenschaften des Füllgutes oder der Atmosphäre (105);
   wobei die Auswerteeinheit weiterhin zum Bestimmen eines Korrekturfaktors für eine vom Füllstandmessgerät bestimmte Laufzeit des an der Oberfläche des Füllgutes reflektierten Messsignals unter Verwendung des Prozessparameters, der bekannten physikalischen Eigenschaften des Füllgutes oder der Atmosphäre (105) und einer Abweichung des Prozessparameters ausgeführt ist.

2. Füllstandmessgerät (101) nach Anspruch 1, wobei die Auswerteeinheit (102) weiterhin zum Korrigieren der vom Füllstandmessgerät (101) bestimmten Laufzeit des an der Oberfläche (110) des Füllgutes (106) reflektierten Messsignals unter Verwendung des Korrekturfaktors ausgeführt ist.

3. Füllstandmessgerät (101) nach einem der vorhergehenden Ansprüche,
   wobei der Prozessparameter eine vom Füllstandmessgerät unter Verwendung des an der Referenzreflexionsstelle reflektierten Messsignals geschätzte Temperatur am Ort der Referenzreflexionsstelle (104) ist.

4. Füllstandmessgerät (101) nach Anspruch 1 oder 2, wobei der Prozessparameter ein unter Verwendung des an der Referenzreflexionsstelle reflektierten Messsignals geschätzter Druck am Ort der Referenzreflexionsstelle (104) ist.

5. Füllstandmessgerät (101) nach einem der vorhergehenden Ansprüche,
   wobei die Abweichung des Prozessparameters einer Differenz des Wertes des Prozessparameters am Ort der Referenzreflexionsstelle (104) und des durchschnittlichen Wertes des Prozessparameters oberhalb der Oberfläche (110) des Füllgutes (106) entspricht.

6. Füllstandmessgerät (101) nach einem der vorhergehenden Ansprüche,
   wobei das Füllstandmessgerät (101) zur Bestimmung der Abweichung des Prozessparameters in einer Eichmessung ausgeführt ist.

7. Füllstandmessgerät (101) nach einem der vorhergehenden Ansprüche, weiter aufweisend:
   eine Eingabeeinrichtung (120) zur Eingabe der Abweichung des Prozessparameters.

8. Füllstandmessgerät (101) nach einem der vorhergehenden Ansprüche,
   wobei die Auswerteeinheit zum Bestimmen des Korrekturfaktors in Abhängigkeit der Distanz (121) zwischen der Referenzreflexionsstelle und der Oberfläche (110) des Füllgutes (106) ausgeführt ist.

9. Verfahren zum Korrigieren einer von einem Füllstandmessgerät bestimmten Laufzeit eines an der Oberfläche eines Füllgutes reflektierten Messsignals, aufweisend die Schritte:

   Abstrahlen eines Messsignals in Richtung einer Oberfläche (110) eines Füllgutes (106) und zum Empfangen des an der Oberfläche des Füllgutes sowie an einer Referenzreflexionsstelle (104) reflektierten Messsignals;
   Bestimmen eines Prozessparameters am Ort der Referenzreflexionsstelle unter Verwendung des an der Referenzreflexionsstelle reflektierten Messsignals sowie bekannter physikalischer Eigenschaften des Füllgutes oder der Atmosphäre (105) oberhalb des Füllgutes;
   Bestimmen eines Korrekturfaktors für eine vom Füllstandmessgerät bestimmte Laufzeit des an der Oberfläche des Füllgutes reflektierten Messsignals unter Verwendung des Prozessparameters, der bekannten physikalischen Eigenschaften und einer Abweichung des Prozessparameters ausgeführt ist.

10. Verfahren nach Anspruch 9, weiter aufweisend den Schritt:
Korrigieren der vom Füllstandmessgerät (101) bestimmten Laufzeit des an der Oberfläche (110) des Füllgutes (106) reflektierten Messsignals unter Verwendung des Korrekturfaktors.

11. Verfahren nach Anspruch 9 oder 10,
wobei das Berechnen des Korrekturfaktors in Abhängigkeit der Distanz (121) zwischen der Referenzreflexionsstelle und der Oberfläche (110) des Füllgutes (106) erfolgt.

12. Programmelement, das, wenn es auf einem Prozessor eines Füllstandmessgeräts ausgeführt wird, das Füllstandmessgerät anleitet, die folgenden Schritte durchzuführen:

Bestimmen eines Prozessparameters am Ort einer Referenzreflexionsstelle unter Verwendung eines an der Referenzreflexionsstelle reflektierten Messsignals sowie bekannter physikalischer Eigenschaften des Füllgutes (106) oder der Atmosphäre (105) oberhalb des Füllgutes;
Bestimmen eines Korrekturfaktors für eine vom Füllstandmessgerät bestimmte Laufzeit des an der Oberfläche des Füllgutes reflektierten Messsignals unter Verwendung des Prozessparameters, der bekannten physikalischen Eigenschaften und einer Abweichung des Prozessparameters ausgeführt ist.

13. Computerlesbares Medium, auf dem ein Programmelement nach Anspruch 12 gespeichert ist.

**Claims**

1. Fill level measuring device (101) with a transit time correction, comprising:

a transmitting and receiving unit (109) for emitting a measuring signal in direction of a surface (110) of a filling material (106) and for receiving the measuring signal reflected at the surface of the filling material and at a reference reflection point (104); an evaluation unit (102) for determining a process parameter at the location of the reference reflection point using the measuring signal reflected at the reference reflection point and known physical properties of the filling material or the atmosphere (105);
wherein the evaluation unit is further configured to determine a correction factor for a transit time, determined by the fill level measuring device, of the measuring signal reflected at the surface of the filling material using the process parameter, the known physical properties of the filling material or the atmosphere (105) and a deviation in the process parameter.

2. Fill level measuring device (101) according to claim 1,
wherein the evaluation unit (102) is further configured to correct the transit time, determined by the fill level measuring device (101), of the measuring signal reflected at the surface (110) of the filling material (106) using the correction factor.

3. Fill level measuring device (101) according to one of the preceding claims,
wherein the process parameter is a temperature at the location of the reference reflection point (104) estimated by the fill level measuring device using the measuring signal reflected at the reference reflection point.

4. Fill level measuring device (101) according to claim 1 or 2,
wherein the process parameter is a pressure at the location of the reference reflection point (104), estimated by using the measuring signal that is reflected at the Reference reflection point.

5. Fill level measuring device (101) according to one of the preceding claims,
wherein the deviation of the process parameter corresponds to a difference between the value of the process parameter at the location of the reference reflection point (104) and the average value of the process parameter above the surface (110) of the filling material (106).

6. Fill level measuring device (101) according to one of the preceding claims,
wherein the fill level measuring device (101) is configured to determine the deviation of the process parameter in a calibration measurement.

7. Fill level measuring device (101) according to one of the preceding claims, further comprising:
an input device (120) for inputting the deviation of the process parameter.

8. Fill level measuring device (101) according to one of the preceding claims,
wherein the evaluation unit is configured to determining the correction factor as a function of the distance (121) between the reference reflection point and the surface (110) of the filling material (106).

9. Method for correcting a transit time, determined by a fill level measuring device, of a measuring signal reflected at the surface of a filling material, comprising the steps of:

emitting a measuring signal in direction of a surface (110) of a filling material (106) and for receiving the measuring signal reflected at the surface of the filling material and at a reference reflection point (104);

determining a process parameter at the location of the reference reflection point using the measuring signal reflected at the reference reflection point and known physical properties of the filling material or the atmosphere (105) above the filling material;

determining a correction factor for a transit time, determined by the level measuring device, of the measuring signal reflected at the surface of the filling material using the process parameter, the known physical properties and a deviation of the process parameter.

10. Method of claim 9, further comprising the step of: correcting the transit time, determined by the fill level measuring device (101), of the measuring signal reflected at the surface (110) of the filling material (106) using the correction factor.

11. Method according to claim 9 or 10, wherein the calculation of the correction factor takes place as a function of the distance (121) between the reference reflection point and the surface (110) of the filling material (106).

12. Program element which, when executed on a processor of a fill level measuring device, instructs the fill level measuring device to carry out the following steps:

determining a process parameter at the location of the reference reflection point using the measuring signal reflected at the reference reflection point and known physical properties of the filling material or the atmosphere (105) above the filling material;

determining a correction factor for a transit time, determined by the level measuring device, of the measuring signal reflected at the surface of the filling material using the process parameter, the known physical properties and a deviation of the process parameter.

13. Computer-readable medium on which a program element according to Claim 12 is stored.

**Revendications**

1. Appareil de mesure de niveau de remplissage (101) avec correction du temps de propagation, présentant :

une unité d'émission et de réception (109) pour émettre un signal de mesure en direction d'une surface (110) d'un produit de remplissage (106) et pour recevoir le signal de mesure réfléchi à la surface du produit de remplissage ainsi qu'à un point de réflexion de référence (104) ;

une unité d'évaluation (102) pour déterminer un paramètre de processus à l'emplacement du point de réflexion de référence en utilisant le signal de mesure réfléchi au point de réflexion de référence ainsi que des propriétés physiques connues du produit de remplissage ou de l'atmosphère (105) ;

dans lequel l'unité d'évaluation est en outre réalisée pour déterminer un facteur de correction pour un temps de propagation du signal de mesure réfléchi à la surface du produit de remplissage tel que déterminé par l'appareil de mesure de niveau de remplissage en utilisant le paramètre de processus, les propriétés physiques connues du produit de remplissage ou de l'atmosphère (105) et un écart du paramètre de processus.

2. Appareil de mesure de niveau de remplissage (101) selon la revendication 1, dans lequel l'unité d'évaluation (102) est en outre réalisée pour corriger le temps de propagation du signal de mesure réfléchi à la surface (110) du produit de remplissage (106) tel que déterminé par l'appareil de mesure de niveau de remplissage (101) en utilisant le facteur de correction.

3. Appareil de mesure de niveau de remplissage (101) selon l'une des revendications précédentes, dans lequel le paramètre de processus est une température à l'emplacement du point de réflexion de référence (104) estimée par l'appareil de mesure de niveau de remplissage en utilisant le signal de mesure réfléchi au point de réflexion de référence.

4. Appareil de mesure de niveau de remplissage (101) selon la revendication 1 ou 2, dans lequel le paramètre de processus est une pression à l'emplacement du point de réflexion de référence (104) estimée en utilisant le signal de mesure réfléchi au point de réflexion de référence.

5. Appareil de mesure de niveau de remplissage (101) selon l'une des revendications précédentes, dans lequel l'écart du paramètre de processus correspond à une différence entre la valeur du paramètre de processus à l'emplacement du point de réflexion de référence (104) et la valeur moyenne du paramètre de processus au-dessus de la surface (110) du produit de remplissage (106).

6. Appareil de mesure de niveau de remplissage (101) selon l'une des revendications précédentes,

dans lequel l'appareil de mesure de niveau de remplissage (101) est réalisé pour déterminer l'écart du paramètre de processus dans une mesure d'étalonnage.

7. Appareil de mesure de niveau de remplissage (101) selon l'une des revendications précédentes, présentant en outre :
un dispositif d'entrée (120) pour entrer l'écart du paramètre de processus.

8. Appareil de mesure de niveau de remplissage (101) selon l'une des revendications précédentes,
dans lequel l'unité d'évaluation est réalisée pour déterminer le facteur de correction en fonction de la distance (121) entre le point de réflexion de référence et la surface (110) du produit de remplissage (106).

9. Procédé pour corriger un temps de propagation d'un signal de mesure réfléchi à la surface d'un produit de remplissage tel que déterminé par un appareil de mesure de niveau de remplissage, présentant les étapes consistant à :

émettre un signal de mesure en direction d'une surface (110) d'un produit de remplissage (106) et recevoir le signal de mesure réfléchi à la surface du produit de remplissage ainsi qu'à un point de réflexion de référence (104) ;
déterminer un paramètre de processus à l'emplacement du point de réflexion de référence en utilisant le signal de mesure réfléchi au point de réflexion de référence ainsi que des propriétés physiques connues du produit de remplissage ou de l'atmosphère (105) au-dessus du produit de remplissage ;
déterminer un facteur de correction pour un temps de propagation du signal de mesure réfléchi à la surface du produit de remplissage tel que déterminé par l'appareil de mesure de niveau de remplissage en utilisant le paramètre de processus, les propriétés physiques connues et un écart du paramètre de processus.

10. Procédé selon la revendication 9, présentant en outre l'étape consistant à :
corriger le temps de propagation du signal de mesure réfléchi à la surface (110) du produit de remplissage (106) tel que déterminé par l'appareil de mesure de niveau de remplissage (101) en utilisant le facteur de correction.

11. Procédé selon la revendication 9 ou 10,
dans lequel le calcul du facteur de correction est effectué en fonction de la distance (121) entre le point de réflexion de référence et la surface (110) du produit de remplissage (106) .

12. Élément de programme qui, lorsqu'il est exécuté sur un processeur d'un appareil de mesure de niveau de remplissage, amène l'appareil de mesure de niveau de remplissage à exécuter les étapes consistant à :

déterminer un paramètre de processus à l'emplacement d'un point de réflexion de référence en utilisant un signal de mesure réfléchi au point de réflexion de référence ainsi que des propriétés physiques connues du produit de remplissage (106) ou de l'atmosphère (105) au-dessus du produit de remplissage ;
déterminer un facteur de correction pour un temps de propagation du signal de mesure réfléchi à la surface du produit de remplissage tel que déterminé par l'appareil de mesure de niveau de remplissage en utilisant le paramètre de processus, les propriétés physiques connues et un écart du paramètre de processus.

13. Support lisible par ordinateur sur lequel est stocké un élément de programme selon la revendication 12.

**Fig. 1**

**Fig. 2**

**Fig. 3**

**Fig. 4**

**Fig. 5**

**IN DER BESCHREIBUNG AUFGEFÜHRTE DOKUMENTE**

**In der Beschreibung aufgeführte Patentdokumente**

- US 20050024259 A1